# EUROPÄISCHE PATENTSCHRIFT

(11) **EP 3 888 238 B1**
(45) Veröffentlichungstag und Bekanntmachung des Hinweises auf die Patenterteilung: **27.03.2024**
(21) Anmeldenummer: 19801665.1
(22) Anmeldetag: 24.10.2019
(51) Int. Cl.: H02M 7/00, H02G 5/02

(54) **ANTRIEBSSYSTEM**
DRIVE SYSTEM
SYSTÈME D'ENTRAÎNEMENT

(30) Priorität: 28.11.2018 DE 102018009328
(43) Veröffentlichungstag der Anmeldung: 06.10.2021
(73) Patentinhaber: SEW-Eurodrive GmbH & Co, 76646 Bruchsal (DE)
(72) Erfinder: NIKOLA, Joachim, 76703 Kraichtal (DE)
(86) Internationale Anmeldenummer: PCT/EP2019/025360
(87) Internationale Veröffentlichungsnummer: WO 2020/108793

(56) Entgegenhaltungen:
- WO-A1-2017/130119
- CN-A- 104 862 743
- DE-A1-102016 004 884

## Beschreibung

Die Erfindung betrifft ein Antriebssystem.

Es ist allgemein bekannt, dass ein Antriebssystem einen von einem Wechselrichter gespeisten Elektromotor aufweist.

**Aus der** DE 10 2016 004 884 A1 **ist als nächstliegender Stand der Technik ein Antriebssystem mit einer Zwischenkreisverschienung bekannt.**

**Aus der** WO 2017/130119 A1 **ist ein Stromschienenanschluss bekannt.**

**Aus der** CN 104 862 743 A **ist eine Stromschienenverbindung bekannt.**

Der Erfindung liegt daher die Aufgabe zugrunde, ein Antriebssystem weiterzubilden, wobei eine einfache Herstellung ermöglicht werden soll.

Erfindungsgemäß wird die Aufgabe bei dem Antriebssystem nach den in Anspruch 1 angegebenen Merkmalen gelöst.

Wichtige Merkmale der Erfindung bei dem Antriebssystem sind, dass das Antriebssystem Module aufweist, die jeweils einen Anschluss aufweisen,
wobei jeweilige Anschlüsse mittels einer jeweiligen Stromschiene elektrisch verbunden sind,
wobei die jeweilige Stromschiene einen ersten Anschlussbereich, einen zweiten Anschlussbereich und einen zwischen dem ersten und dem zweiten Anschlussbereich angeordneten, den ersten und den zweiten Anschlussbereich elektrisch verbindenden Verbindungsbereich aufweist,
wobei der erste Anschlussbereich eine erste Dicke aufweist,
wobei der zweite Anschlussbereich eine zweite Dicke aufweist,
wobei die erste Dicke kleiner als die zweite Dicke ist.

Von Vorteil ist dabei, dass dieselbe Schraube im ersten und zweiten Anschlussbereich verwendbar ist und außerdem ein zwischengeordnetes Modul vorsehbar ist, welches eine geringere maximal zulässige Stromstärke aufweist als die anderen Module. Trotzdem ist der maximal zulässige Strom über den Verbindungsbereich durchleitbar. Dabei weist der Verbindungsbereich zwar eine geringere Breite auf, welche zur Nutbreite eines die jeweilige Stromschiene aufnehmenden Aufnahmeelements passt, aber im ersten Anschlussbereich weist die jeweilige Stromschiene eine größere Breite auf, so dass die jeweilige Stromschiene in einer entsprechend größeren Nut des weiteren Moduls aufgenommen ist. Dabei ist die Dicke reduzierbar, insbesondere mehr als halbierbar. Auf diese Weise ist eine weitere solchermaßen verjüngte Stromschiene auf den ersten Anschlussbereich auflegbar und mittels der ersten Schraube befestigbar. Im zweiten Anschlussbereich ist eine zur ersten Schraube identisch ausgeführte Schraube verwendbar.

**Erfindungsgemäß** ist
ein erstes der Module ein Versorgungsmodul,
ein zweites der Module ein Zwischenmodul und
ein drittes der Module ein Wechselrichter,

insbesondere wobei das Zwischenmodul
- ein Kondensatormodul,
- ein aktiver Brems-Chopper,
- ein aktives Filtermodul oder
- eine blockförmige Rückspeisung ist zur Rückspeisung von Energie in ein das Versorgungsmodul versorgende Drehspannungssystem, insbesondere bei Überschreiten eines Schwellwertes durch die Spannung am gleichspannungsseitgien Anschluss.

Von Vorteil ist dabei, dass ein Zwischenmodul zur Stabilisierung der am Anschluss anliegenden, insbesondere vom Versorgungsmodul zur Verfügung gestellten, Spannung, insbesondere Gleichspannung vorsehbar ist. Denn ein aktives Filtermodul trägt aktiv zur Stabilisierung bei, ein Kondensatormodul wirkt als Kapazität zusammen mit den Leitungsinduktivitäten als Tiefpass und eine Rückspeisung wirkt spannungsabsenkend, wenn die Spannung am Anschluss einen Schwellwert überschreitet.

Bei einer vorteilhaften Ausgestaltung ist die jeweilige Dicke jeweils parallel zur Schraubenachse der zur Kontaktierung verwendeten Schraube gemessen. Von Vorteil ist dabei, dass die Breite senkrecht zur Dicke gemessen wird, insbesondere auch senkrecht zur Verbindungslinie zwischen dem ersten und dem zweiten Anschlussbereich.

Bei einer vorteilhaften Ausgestaltung ist die Breite der jeweiligen Stromschiene im ersten Anschlussbereich größer als die Breite der jeweiligen Stromschiene im zweiten Anschlussbereich. Von Vorteil ist dabei, dass die maximal zulässige Stromstärke des ersten Anschlussbereichs infolge der erhöhten Dicke im Verbindungsbereich durch den Verbindungsbereich durchleitbar ist bis zum zweiten Anschlussbereich. Außerdem ist im Verbindungsbereich ein Loch vorsehbar, durch welches das Zwischenmodul mittels einer insbesondere dritten schraube anschließbar ist.

Bei einer vorteilhaften Ausgestaltung gleicht die Breite der jeweiligen Stromschiene im ersten Anschlussbereich der Breite der jeweiligen Stromschiene im zweiten Anschlussbereich. Von Vorteil ist dabei, dass die beiden dort angeschlossenen Module, insbesondere Versorgungsmodul und Wechselrichter, dieselbe maximal zulässige Stromstärke aufweisen.

Bei einer vorteilhaften Ausgestaltung ist die Querschnittsfläche der Stromschiene im Verbindungsbereich gleich oder größer als die Querschnittsfläche der Stromschiene im ersten Anschlussbereich. Von Vorteil ist dabei, dass die hohe Stromstärke durchleitbar ist und trotzdem eine geringere Breite vorhanden ist im Vergleich zur Breite des ersten Anschlussbereichs.

Bei einer vorteilhaften Ausgestaltung gleicht die Querschnittsfläche der Stromschiene im ersten Anschlussbereich der Querschnittsfläche der Stromschiene im zweiten Anschlussbereich. Von Vorteil ist dabei, dass die beiden zugehörigen Module dieselbe Leistungsklasse aufweisen, insbesondere eine größere Leistungsklasse als das zwischengeordnete Zwischenmodul.

Bei einer vorteilhaften Ausgestaltung weist
die jeweilige Stromschiene im ersten Anschlussbereich ein durchgehendes Loch auf,
weist die jeweilige Stromschiene im zweiten Anschlussbereich ein durchgehendes Loch auf und
die jeweilige Stromschiene weist im Verbindungsbereich ein durchgehendes Loch auf. Von Vorteil ist dabei, dass die Stromschienen mittels Schrauben elektrisch kontaktierbar sind.

Bei einer vorteilhaften Ausgestaltung ist der erste Anschlussbereich mittels einer Stufe zum Verbindungsbereich hin abgegrenzt,
insbesondere so, dass vom Verbindungsbereich her der erste Anschlussbereich verjüngt ausgeführt ist, insbesondere so, dass die Dicke der jeweiligen Stromschiene vom Verbindungsbereich her zum ersten Anschlussbereich hin monoton abnimmt, insbesondere aber nicht streng monoton abnimmt. Von Vorteil ist dabei, dass die Stromschiene aus einem Blech fertigbar ist, das eine einheitliche konstante Dicke aufweist mit Ausnahme der kaltverformt hergestellten Verjüngung im ersten Anschlussbereich. Diese verjüngte und somit kleinere Dicke im ersten Anschlussbereich ist einfach herstellbar mittels Pressen.

Bei einer vorteilhaften Ausgestaltung ist die jeweilige Stromschiene einteilig, also einstückig, ausgeführt. Von Vorteil ist dabei, dass
eine einfache kostengünstige Herstellung ermöglicht ist.

Bei einer vorteilhaften Ausgestaltung ist die jeweilige Stromschiene zweiteilig ausgeführt, insbesondere aus einem ersten und einem zweiten Stromschienenteil. Von Vorteil ist dabei, dass die Stromschienenteile mit anderen Stromschienen verschiedenartig miteinander kombinierbar sind.

Bei einer vorteilhaften Ausgestaltung ist der zweite Anschlussbereich mittels einer Stufe zum Verbindungsbereich hin abgegrenzt,
insbesondere so, dass vom Verbindungsbereich her der zweite Anschlussbereich verjüngt ausgeführt ist, insbesondere so, dass die Dicke der jeweiligen Stromschiene vom Verbindungsbereich her zum zweiten Anschlussbereich hin monoton abnimmt, insbesondere aber nicht streng monoton abnimmt. Von Vorteil ist dabei, dass

Bei einer vorteilhaften Ausgestaltung ist der erste Anschlussbereich in einer Nut eines Anschlusselements des Wechselrichters aufgenommen,
wobei der zweite Anschlussbereich in einer Nut eines Anschlusselements des Versorgungsmoduls aufgenommen ist,
wobei der Verbindungsbereich in einer Nut eines Anschlusselements des Zwischenmoduls aufgenommen ist. Von Vorteil ist dabei, dass die Stromschiene nur in die Nuten der Anschlusselemente der Module eingelegt werden muss und nachfolgend mittels der Schrauben befestigt werden muss, so dass somit die elektrische Kontaktierung erreicht ist.

Bei einer vorteilhaften Ausgestaltung **ist das Zwischenmodul ein Kondensatormodul, das eine Parallelschaltung von Kondensatoren aufweist, welche aus dem Anschluss des Kondensatormoduls versorgt ist.** Von Vorteil ist dabei, dass eine große Kapazität dem Anschluss parallel bereit stellbar ist und somit die Spannung am Anschluss glättbar ist.

Bei einer vorteilhaften Ausgestaltung ist die Stromschiene kaltverformt hergestellt, insbesondere die Verjüngung der Stromschiene kaltverformend hergestellt ist. Von Vorteil ist dabei, dass eine einfache Herstellung ermöglicht ist.

Weitere Vorteile ergeben sich aus den Unteransprüchen.

Die Erfindung wird nun anhand von schematischen Abbildungen näher erläutert:
In der Figur 1 sind zwei erfindungsgemäße Stromschienen 1 in Schrägansicht dargestellt, die jeweils eine Verjüngung 3 aufweisen und zwei Anschlüsse für erste Stromstärke verbinden.
In der Figur 2 sind zwei erfindungsgemäße Stromschienen 1 in Schrägansicht dargestellt, die jeweils zwei Verjüngungen 3 aufweisen und zwei Anschlüsse für erste Stromstärke verbinden.

In der Figur 3 sind zwei erfindungsgemäße Stromschienen (30, 31) in Schrägansicht dargestellt, die einen Anschluss für erste Stromstärke mit einem Anschluss für zweite Stromstärke verbinden.

In der Figur 4 sind zwei zweigeteilte Stromschienen 40 in Schrägansicht dargestellt, die zwei Anschlüsse für erste Stromstärke verbinden.

In der Figur 5 sind zwei zweigeteilte Stromschienen 40 in Schrägansicht dargestellt, die einen Anschluss für erste Stromstärke mit einem Anschluss für zweite Stromstärke verbinden.

In der Figur 6 ist ein Antriebssystem gezeigt, bei welchem die erfindungsgemäßen Stromschienen 20 Gleichstromanschlüsse von Modulen verbinden.

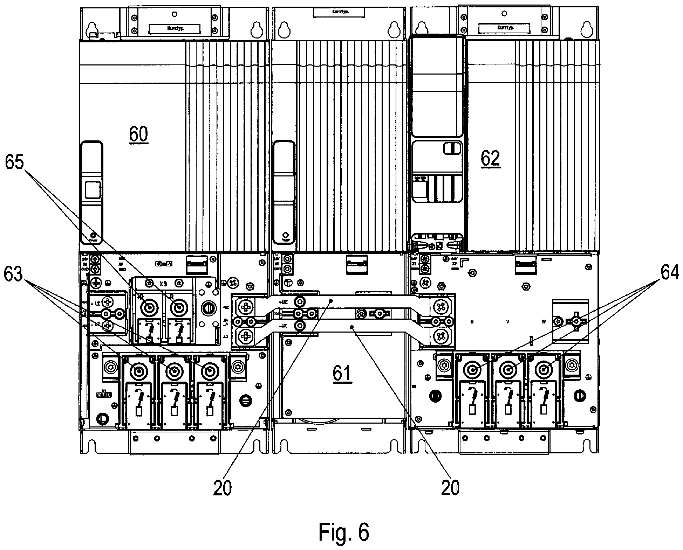

Wie in Figur 6 dargestellt, ist das erste der Module ein Versorgungsmodul 60, das zweite der Module ein Zwischenmodul 61 und das dritte der Module ein Wechselrichter 62.

Das Versorgungsmodul 60 weist einen Drehspannungsanschluss 63 auf, welcher einen Gleichrichter speist, an dessen gleichspannungsseitiger Anschluss die Stromschienen 20 elektrisch angeschlossen sind. Außerdem ist aus dem gleichspannungsseitigen Anschluss eine Reihenschaltung gespeist, welche einen steuerbaren Halbleiterschalter und einen an dem weiteren Anschluss 65 des Versorgungsmoduls 60 angeschlossenen Bremswiderstand. Somit ist bei Überschreiten eines Schwellwertes die Spannung am gleichspannungsseitigen Anschluss verminderbar.

Zwischen dem Wechselrichter 62 und dem Versorgungsmodul 60 ist das Zwischenmodul 61 angeordnet und elektrisch an die Stromschienen 20 angeschlossen. Der jeweilige vom Versorgungsmodul 60 abgewandte Endbereich der jeweiligen Stromschienen 20 ist mit dem gleichspannungsseitigen Anschluss des Wechselrichters 62 verbunden.

Somit sind die gleichspannungsseitigen Anschlüsse der Module parallel geschaltet mittels der Stromschienen 20.

Am wechselspannungsseitigen Anschluss 64 des Wechselrichters 62 sind die Phasenleitungen eines Drehstrommotors angeschlossen.

Der gleichspannungsseitige Anschluss des Wechselrichters 62 und des Versorgungsmoduls 60 ist für eine erste Stromstärke ausgelegt, welche den gleichspannungsseitigen Anschluss des Zwischenmoduls zerstören könnte, da dieser Anschluss nur für eine zweite Stromstärke ausgelegt ist, die kleiner ist als die erste Stromstärke.

Zur Versorgung des Zwischenmoduls 61 weisen die Stromschienen 1 jeweils durchgehende Löcher 6, also Ausnehmungen, wie Bohrloch oder dergleichen, auf. Durch diese Löcher ist jeweils eine Schraube durchführbar und somit das Zwischenmodul 61 versorgbar.

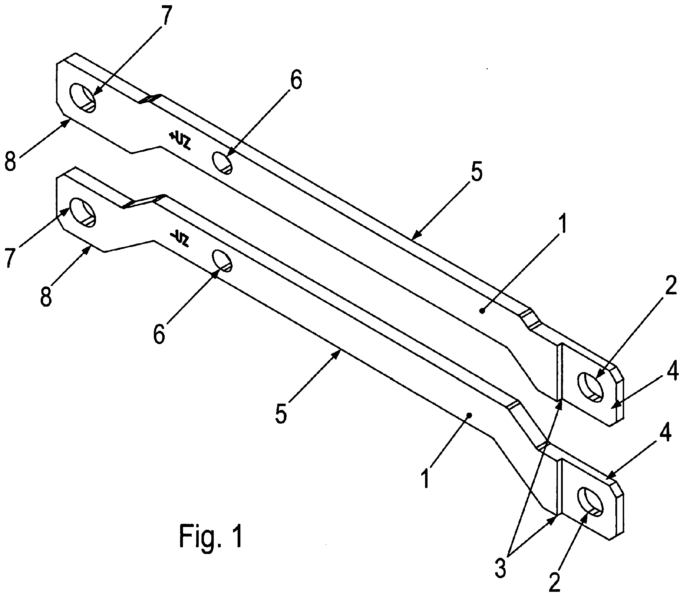

Das Zwischenmodul 61 ist als Kondensatormodul ausführbar, so dass die zwischen den beiden Stromschienen 1 nach Figur 1 anliegende Spannung geglättet und somit stabilisiert wird. Dabei ist es wichtig, dass das Zwischenmodul 61 räumlich zwischen den beiden anderen Modulen angeordnet ist, da ansonsten die Leitungsinduktivitäten der Stromschienen 1 besonders wirksam werden. Durch die räumlich zwischengeordnete und/oder mittige Anordnung des als Kondensatormodul ausgeführten Zwischenmoduls 61 zwischen die beiden anderen Module ist ein Filter, insbesondere LCL-Filter realisiert, das ein Tiefpassverhalten aufweist und somit Schwingungsneigung des Antriebssystems reduziert, also spannungsstabilisierend wirkt.

Die Stromschiene 1 weist in ihrem zweiten Anschlussbereich 8 ein Loch 7 zur Durchführung einer Schraube auf. Damit ist die Stromschiene 1 am gleichspannungsseitigen Anschluss des Versorgungselements 60 elektrisch kontaktierbar.

Im zweiten Anschlussbereich 8 weist die Stromschiene 1 eine zweite Dicke auf, welche auch der Verbindungsbereich 5 aufweist, welcher den ersten Anschlussbereich 4 mit dem zweiten Anschlussbereich 8 verbindet.

Der erste Anschlussbereich 4 weist eine größere Breite auf als die kleinste Breite des Verbindungsbereichs 5 beträgt. Jedoch ist die Dicke, also die parallel zur Schraubenachse der zur Kontaktierung verwendeten Schraube gemessene Dicke, im ersten Anschlussbereich 4 geringer als im zweiten Anschlussbereich 8 und auch als im Verbindungsbereich 5.

Im Verbindungsbereich 5 ist auch ein durchgehendes Loch 6 zum Durchführen einer Schraube vorgesehen, so dass das Zwischenmodul mit seinem gleichspannungsseitigen Anschluss mittels der Schraube elektrisch kontaktierbar ist.

Somit weist also der erste Anschlussbereich 4 im Übergangsbereich zum Verbindungsbereich 5 eine Verjüngung 3 auf, die als Stufe ausgeführt ist.

Die Stromschiene 1 wird jeweils mit einer jeweiligen Schraube an einem jeweiligen Elektrogerät befestigt, wobei die Schraube auch zur elektrischen Kontaktierung dient.

Dabei wird die Stromschiene 1 in einer jeweiligen Nut eines jeweiligen Aufnahmeelements des jeweiligen Elektrogeräts aufgenommen. Die Nutbreite der jeweiligen Nut entspricht dem Maximalstrom, welcher für das Elektrogerät vorgesehen ist.

Dabei wird eine zweite Schraube durch das Loch 7 geführt und mit ihrem Gewindeabschnitt in eine Gewindebohrung des Aufnahmeelements des Versorgungsmoduls 60 eingeschraubt, bis der Schraubenkopf der Schraube die Stromschiene 1 an das Aufnahmeelement andrückt und somit eine elektrische Kontaktierung bewirkt ist. Ebenso ist eine dritte weitere Schraube durch das Loch 6 geführt und in ein Aufnahmeelement des Zwischenmoduls 61 eingeschraubt. Dabei ist jedoch eine kleinere Nutbreite des Anschlusselements des Zwischenmoduls 61 ausgeführt als die Nutbreite der Nut des Anschlusselements des Versorgungsmoduls 60.

Eine erste Schraube ist durch das Loch 2 im ersten Anschlussbereich 4 durchgeführt und in eine Gewindebohrung des Anschlusselements des Wechselrichters 62 eingeschraubt. Dabei ist jedoch eine in den Figuren nicht gezeigte Stromschiene mit ihrem ebenso wie bei der Stromschiene 1 verjüngten Bereich auf den verjüngten Bereich, also ersten Anschlussbereich 4, der Stromschiene 1 aufgelegt und wird von dem Schraubenkopf der ersten Schraube angedrückt.

Somit ist bei der ersten und bei der zweiten Schraube jeweils dieselbe Schraubenlänge und somit auch Gewindebereich verwendbar. Erste und zweite Schraube sind also identisch zueinander ausführbar.

Somit ist die Stromschiene 1 also im zweiten Anschlussbereich 8 zwar mit der durch das Aufnahmeelement vorgegebenen Breite ausgeführt, die der Nutbreite des Aufnahmeelements des Versorgungsmoduls 60 entspricht, jedoch ist die Dicke in diesem zweiten Anschlussbereich 8 viel größer als die zulässige maximale Stromstärke des Versorgungsmoduls 60 hier erfordern würde.

Auf diese Weise ist aber erreicht, dass die Stromschiene 1 im Verbindungsbereich 5 nur die viel schmalere der Nutbreite des Anschlusselements des Zwischenmoduls 61 entsprechenden Breite aufweist und trotzdem die vom Versorgungsmodul 60 gelieferte maximal zulässige Stromstärke über den Verbindungsbereich 5 bis zum zweiten Anschlussbereich des Wechselrichters 62 durchgeleitet wird, obwohl im Verbindungsbereich 5 das Loch 6 für die dritte Schraube angeordnet ist und somit den Querschnitt in dem ihn umgebenden benachbarten Bereich vermindert.

Im zweiten Anschlussbereich 8 ist wiederum dieselbe Nutbreite wie beim ersten Anschlussbereich 4 vorhanden, insbesondere da das Versorgungsmodul 60 zur gleichen Leistungsklasse wie auch der Wechselrichter 62 gehört, also dieselbe maximale Stromstärke aufweist. Nur im Verbindungsbereich 5 ist wegen der kleineren Leistungsklasse des Zwischenmoduls 61, also der im Vergleich zur maximal zulässigen Stromstärke des Versorgungsmoduls 60 geringeren maximal zulässigen Stromstärke des Zwischenmoduls 61, eine geringere Nutbreite des Aufnahmeelements des Zwischenmoduls 1 vorgesehen im Vergleich zur Nutbreite des Aufnahmeelements des Versorgungsmoduls 60 und im Vergleich zur Nutbreite des Aufnahmeelements des Wechselrichters 62.

Die in Figur 1 oben abgebildete Stromschiene 1 führt ein oberes Potential +Uz einer Gleichspannung, insbesondere Zwischenkreisspannung.

Die in Figur 1 unten abgebildete Stromschiene 1 führt ein unteres Potential +Uz der Gleichspannung.

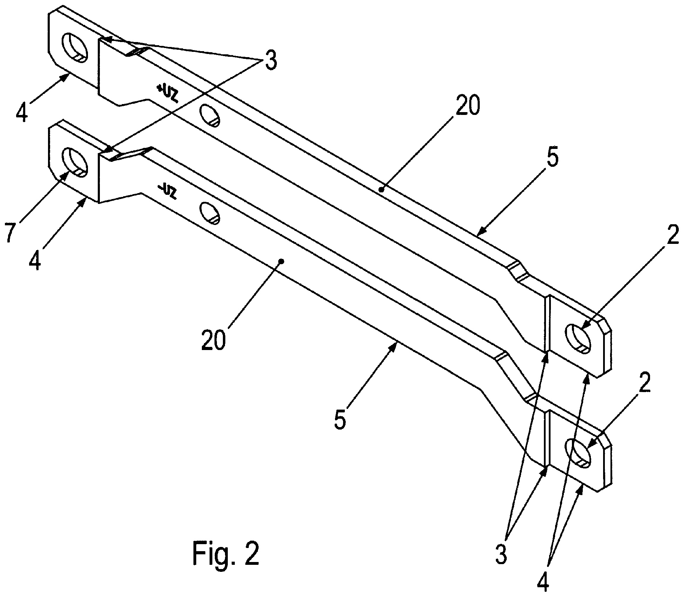

Im Unterschied zur Ausführung nach Figur 1 weisen die beiden Stromschienen 20 der Figur 2 auch im zweiten Anschlussbereich 4 eine Verjüngung auf. Daher sind die Bezugszeichen entsprechend den Bezugszeichen des ersten Anschlussbereichs 4 gewählt. Auf diese Weise ist also mit derselben Schraube, die durch das Loch 7 im zweiten Anschlussbereich 4 geführt ist. Eine weitere, in den Figuren nicht gezeigte Stromschiene im zweiten Anschlussbereich 4 auf die erste Stromschiene der Figur 2 auflegbar und somit ein weiteres Elektrogerät, insbesondere Wechselrichter, auf der vom Zwischenmodul 61 abgewandten Seite des Versorgungsmoduls 60 versorgbar.

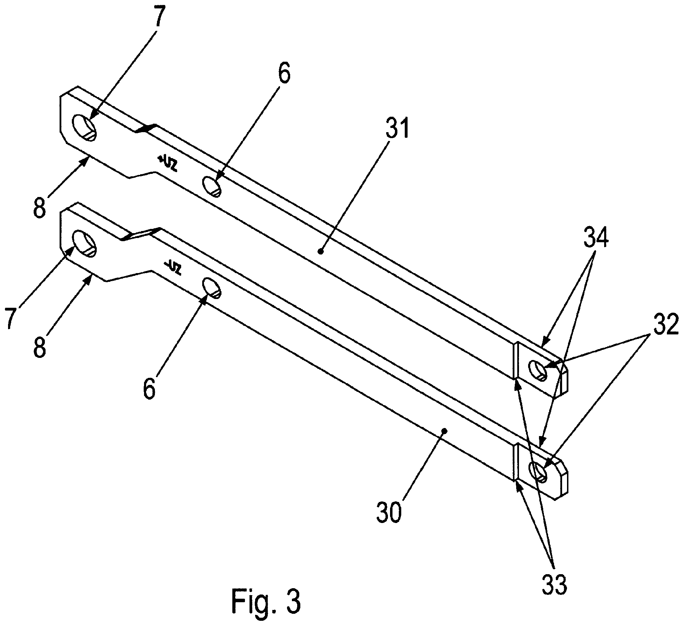

Figur 3 zeigt im Unterschied zur Figur 1 und 2, dass der erste Anschlussbereich der Figur 1 oder 2 ersetzt wird durch einen verjüngten Anschlussbereich 34, der ein Loch 32 aufweist, durch welches eine Schraube durchführbar ist, welche dieselbe Länge aufweist und identisch ausgeführt ist wie die dritte weitere Schraube. Somit ist mittels der Stromschiene 30 vom Versorgungsmodul 60 nicht nur ein Zwischenmodul 61, sondern auch ein weiteres Elektrogerät mit derselben maximal zulässigen Stromstärke wie auch das Zwischenmodul 61. Somit ist dann auch die Nutbreite des den ersten Anschlussbereich 34 aufnehmenden Aufnahmeelements gleich groß wie die Nutbreite der Nut des den Verbindungsbereich 5 aufnehmenden Aufnahmeelements des Zwischenmoduls 61.

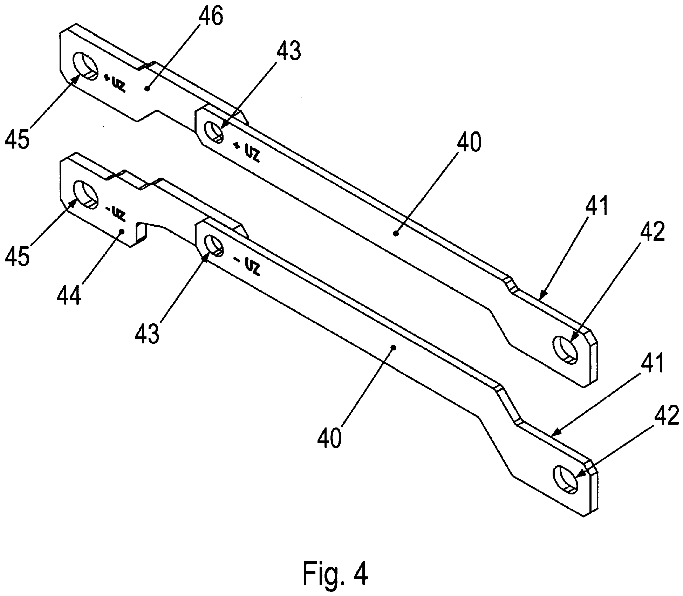

Figur 4 zeigt eine zweigeteilte Ausführung der Stromschienen 1 der Figur 1. Hierbei ist ein erstes Stromschienenteil 46 mit einem zweiten Stromschienenteil 40 verbunden, indem jedes der beiden Stromschienenteile (40, 46) jeweils ein Loch 43 aufweist, durch welches die dritte Schraube geführt ist und somit auch für diese zweigeteilte Ausführung nach Figur 4 verwendbar ist. Somit versorgt das Versorgungsmodul 60 wiederum den Wechselrichter 62, wofür die Stromschienenteil 40 jeweils einen ersten Anschlussbereich 41 aufweisen. Das Zwischenmodul 61 ist wiederum zwischengeordnet und wird durch die Kontaktierung mit der dritten Schraube elektrisch verbunden. Allerdings ist der Verbindungsbereich im Unterschied zu Figur 1 aufgetrennt in zwei Teilbereiche. Im ersten Anschlussbereich des Stromschienenteils 40 ist wiederum das Loch 42 zur Durchführung der ersten Schraube angeordnet. Im zweiten Stromschienenteil 46 ist wiederum der zweite Anschlussbereich vorgesehen, der das Loch 45 zur Durchführung der zweiten Schraube aufweist.

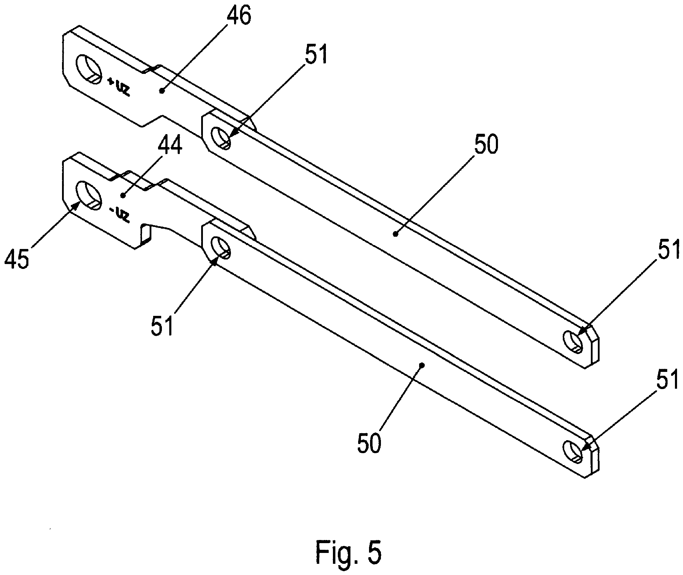

Figur 5 zeigt eine zweigeteilte Ausführung der Stromschienen 30 der Figur 3. Hierbei sind wiederum ein erstes Stromschienenteil 50 und ein zweites Stromschienenteil mittels einer dritten Schraube, welche durch zwei Löcher 51 durchgeführt ist, wobei das erste der Löcher im ersten Stromschienenteil 50 und das zweite der Löcher 51 im zweiten Stromschienenteil angeordnet ist.

Das zweite Stromschienenteil 46 für das Führen des oberen Potentials beziehungsweise 44 für das Führen des unteren Potentials weist wiederum einen zweiten Anschlussbereich auf, in welchem ein durchgehendes Loch 45 angeordnet ist.

Figur 6 zeigt ein Antriebssystem, welches das Versorgungsmodul 60 aufweist, welches die Gleichspannung, insbesondere Zwischenkreisspannung zur Verfügung stellt. Diese Gleichspannung wird mittels der Stromschienen 1 dem Wechselrichter 62 zur Verfügung gestellt. Zwischengeordnet ist das Zwischenmodul 61, welches zur Stabilisierung der Gleichspannung beiträgt, da die Leitungsinduktivität zwischen der dritten Schraube und der ersten Schraube und die Leitungsinduktivität zwischen der dritten Schraube und der zweiten schraube zusammen mit der Kapazität des Zwischenmoduls 61 ein T-förmiges Filter bilden.

Das Filter weist ein tiefpassartiges Verhalten und unterdrückt somit höherfrequente Stromanteile.

Bei weiteren erfindungsgemäßen Ausführungsbeispielen wird statt des Kondensatormoduls ein aktiver Brems-Chopper ein aktives Filtermodul oder eine blockförmige Rückspeisung zur Rückspeisung von Energie in das das Versorgungsmodul 61 versorgende Drehspannungssystem, wenn eine zu hohe Spannung am gleichspannungsseitgien Anschluss auftritt.

### Bezugszeichenliste

1 Stromschiene
2 Loch
3 Verjüngung, insbesondere Stufe
4 erster Anschlussbereich, insbesondere mit erster Dicke
5 Verbindungsbereich mit zweiter Dicke
6 Loch
7 Loch
8 zweiter Anschlussbereich
20 Stromschiene
30 Stromschiene
31 Stromschiene
32 Loch
33 Verjüngung, insbesondere Stufe
34 erster Anschlussbereich, insbesondere mit erster Dicke
40 Stromschienenteil
41 Anschlussbereich, insbesondere mit erster Dicke
42 Loch
43 Loch
44 erster Anschlussbereich
45 Loch
46 Stromschienenteil
50 Stromschiene
51 Loch
60 Versorgungsmodul
61 Zwischenmodul
62 Wechselrichter
63 Anschlusselemente für Drehstromphasen
64 Anschlusselemente für Drehstrommotorphasen

## Patentansprüche

1. Antriebssystem,
aufweisend Module, die jeweils einen Anschluss aufweisen,
wobei jeweilige Anschlüsse mittels einer jeweiligen Stromschiene (1, 20, 30, 31, 40, 50) elektrisch verbunden sind,
**wobei** die jeweilige Stromschiene (1, 20, 30, 31, 40, 50) einen ersten Anschlussbereich (4, 34, 44), einen zweiten Anschlussbereich (8) und einen zwischen dem ersten und dem zweiten Anschlussbereich angeordneten, den ersten und den zweiten Anschlussbereich elektrisch verbindenden Verbindungsbereich (5) aufweist,
wobei der erste Anschlussbereich (4, 34, 44) eine erste Dicke aufweist,
wobei der zweite Anschlussbereich (8) eine zweite Dicke aufweist,
wobei
**der Verbindungsbereich** (5) **die zweite Dicke** aufweist,
**wobei ein erstes der Module ein Versorgungsmodul (60),**
**ein zweites der Module ein Zwischenmodul (61) und**
**ein drittes der Module ein einen Elektromotor speisender Wechselrichter (62) ist,**
**wobei das Zwischenmodul (61)**
- **ein Kondensatormodul,**
- **ein aktiver Brems-Chopper,**
- **ein aktives Filtermodul oder**
- **eine blockförmige Rückspeisung zur Rückspeisung von Energie in ein das Versorgungsmodul (60) versorgende Drehspannungssystem, insbesondere bei Überschreiten eines Schwellwertes durch die Spannung am gleichspannungsseitgien Anschluss,**
**ist,**
**wobei eine erste Schraube durch ein erstes Loch** (2) **im ersten Anschlussbereich** (4, 34, 44) **durchgeführt und in eine Gewindebohrung des Anschlusselements des als Wechselrichter** (62) **ausgeführten Moduls eingeschraubt ist,**
**wobei eine zweite Schraube durch ein zweites Loch** (7) **geführt und mit ihrem Gewindeabschnitt in eine Gewindebohrung des Aufnahmeelements des Versorgungsmoduls** (60) **eingeschraubt ist, bis der Schraubenkopf der Schraube die** Stromschiene **an das Aufnahmeelement andrückt und somit eine elektrische Kontaktierung bewirkt ist,**
**wobei eine dritte weitere Schraube durch ein drittes Loch** (6) **geführt und in ein Aufnahmeelement des Zwischenmoduls** (61) **eingeschraubt ist,**
**dadurch gekennzeichnet, dass**
die erste Dicke kleiner als die zweite Dicke ist,
die Stromschiene (1, 20, 30, 31, 40, 50) in einer jeweiligen Nut eines jeweiligen Aufnahmeelements des jeweiligen als Elektrogerät ausgeführten Moduls aufgenommen ist, wobei die Nutbreite der jeweiligen Nut demjenigen Maximalstrom entspricht, welcher für das jeweilige Elektrogerät vorgesehen ist,
wobei die Nutbreite des Anschlusselements des Zwischenmoduls (61) kleiner ausgeführt als die Nutbreite der Nut des Anschlusselements des Versorgungsmoduls (60).

2. **Antriebssystem nach Anspruch 1,**
**dadurch gekennzeichnet, dass**
die jeweilige Dicke jeweils parallel zur Schraubenachse der zur Kontaktierung verwendeten Schraube gemessen ist.

3. Antriebssystem nach einem der vorangegangenen Ansprüche,
**dadurch gekennzeichnet, dass**
die Breite der jeweiligen Stromschiene (1, 20, 30, 31, 40, 50) im ersten Anschlussbereich (4, 34, 44) größer ist als die Breite der jeweiligen Stromschiene (1, 20, 30, 31, 40, 50) im zweiten Anschlussbereich (8).

4. Antriebssystem nach einem der Ansprüche 1 oder 2,
**dadurch gekennzeichnet, dass**
die Breite der jeweiligen Stromschiene (1, 20, 30, 31, 40, 50) im ersten Anschlussbereich (4, 34, 44) der Breite der jeweiligen Stromschiene (1, 20, 30, 31, 40, 50) im zweiten Anschlussbereich (8) gleicht.

5. Antriebssystem nach einem der vorangegangenen Ansprüche,
**dadurch gekennzeichnet, dass**
die Querschnittsfläche der Stromschiene (1, 20, 30, 31, 40, 50) im Verbindungsbereich gleich oder größer ist als die Querschnittsfläche der Stromschiene (1, 20, 30, 31, 40, 50) im ersten Anschlussbereich (4, 34, 44).

6. Antriebssystem nach einem der vorangegangenen Ansprüche,
**dadurch gekennzeichnet, dass**
**die Querschnittsfläche der Stromschiene (1, 20, 30, 31, 40, 50) im ersten Anschlussbereich (4, 34, 44) der Querschnittsfläche der Stromschiene (1, 20, 30, 31, 40, 50) im zweiten Anschlussbereich (8) gleicht.**

7. Antriebssystem nach einem der vorangegangenen Ansprüche,
**dadurch gekennzeichnet, dass**
die jeweilige Stromschiene (1, 20, 30, 31, 40, 50) im ersten Anschlussbereich (4, 34, 44) ein durchgehendes Loch (2, 6, 7, 32, 42, 43, 45, 51) aufweist,
die jeweilige Stromschiene (1, 20, 30, 31, 40, 50) im zweiten Anschlussbereich (8) ein durchgehendes Loch (2, 6, 7, 32, 42, 43, 45, 51) aufweist und
die jeweilige Stromschiene (1, 20, 30, 31, 40, 50) im Verbindungsbereich (5) ein durchgehendes Loch (2, 6, 7, 32, 42, 43, 45, 51) aufweist.

8. Antriebssystem nach einem der vorangegangenen Ansprüche,
**dadurch gekennzeichnet, dass**
der erste Anschlussbereich (4, 34, 44) mittels einer Stufe zum Verbindungsbereich hin abgegrenzt ist,
insbesondere so, dass vom Verbindungsbereich her der erste Anschlussbereich (4, 34, 44) verjüngt ausgeführt ist, insbesondere so, dass die Dicke der jeweiligen Stromschiene (1, 20, 30, 31, 40, 50) vom Verbindungsbereich her zum ersten Anschlussbereich (4, 34, 44) hin monoton abnimmt, insbesondere aber nicht streng monoton abnimmt.

9. Antriebssystem nach einem der vorangegangenen Ansprüche,
**dadurch gekennzeichnet, dass**
die jeweilige Stromschiene (1, 20, 30, 31, 40, 50) einteilig, also einstückig, ausgeführt ist oder dass
die jeweilige Stromschiene (1, 20, 30, 31, 40, 50) zweiteilig ausgeführt ist, insbesondere aus einem ersten und einem zweiten Stromschienenteil (40, 46).

10. Antriebssystem nach einem der vorangegangenen Ansprüche,
**dadurch gekennzeichnet, dass**
der zweite Anschlussbereich (8) mittels einer weiteren Stufe zum Verbindungsbereich hin abgegrenzt ist,
insbesondere so, dass vom Verbindungsbereich her der zweite Anschlussbereich (8) verjüngt ausgeführt ist, insbesondere so, dass die Dicke der jeweiligen Stromschiene (1, 20, 30, 31, 40, 50) vom Verbindungsbereich her zum zweiten Anschlussbereich (8) hin monoton abnimmt, insbesondere aber nicht streng monoton abnimmt.

11. Antriebssystem nach einem der vorangegangenen Ansprüche,
**dadurch gekennzeichnet, dass**
der erste Anschlussbereich (4, 34, 44) in einer Nut eines Anschlusselements des Wechselrichters (62) aufgenommen ist
wobei der zweite Anschlussbereich (8) in einer Nut eines Anschlusselements des Versorgungsmoduls (60) aufgenommen ist,
wobei der Verbindungsbereich in einer Nut eines Anschlusselements des Zwischenmoduls (61) aufgenommen ist.

12. Antriebssystem nach einem der vorangegangenen Ansprüche,
**dadurch gekennzeichnet, dass**
**das Zwischenmodul ein Kondensatormodul ist, das** eine Parallelschaltung von Kondensatoren aufweist, welche aus dem Anschluss des **Kondensatormoduls** versorgt ist.

13. Antriebssystem nach einem der vorangegangenen Ansprüche,
**dadurch gekennzeichnet, dass**
die Stromschiene (1, 20, 30, 31, 40, 50) kaltverformt hergestellt ist, insbesondere die Verjüngung der Stromschiene (1, 20, 30, 31, 40, 50) kaltverformend hergestellt ist.

## Claims

1. Drive system
comprising modules that each comprise a terminal,
each terminal being electrically connected by means of a respective busbar (1, 20, 30, 31, 40, 50),
each busbar (1, 20, 30, 31, 40, 50) comprising a first terminal region (4, 34, 44), a second terminal region (8) and a connection region (5), which is arranged between the first and the second terminal region and electrically connects the first and the second terminal region, the first terminal region (4, 34, 44) having a first thickness,
the second terminal region (8) having a second thickness,
the connection region (5) having the second thickness,
a first of the modules being a power supply module (60), a second of the modules being an intermediate module (61) and a third of the modules being an inverter (62) that feeds an electric motor,
the intermediate module (61) being
- a capacitor module,
- an active brake chopper,
- an active filter module or
- a block-like backfeed for backfeeding energy into a three-phase voltage system that supplies the power supply module (60), in particular when the voltage at the DC voltage-side terminal exceeds a threshold value,
a first screw being guided through a first hole (2) in the first terminal region (4, 34, 44) and being screwed into a threaded bore in the terminal element of the module configured as the inverter (62),
a second screw being guided through a second hole (7) and being screwed, by its threaded portion, into a threaded bore in the receiving element of the power supply module (60) until the screw head of the screw presses the busbar onto the receiving element, thereby bringing about electrical contact,
a further, third screw being guided through a third hole (6) and being screwed into a receiving element of the intermediate module (61),
**characterised in that**
the first thickness is smaller than the second thickness,
the busbars (1, 20, 30, 31, 40, 50) are each received in a respective groove in a respective receiving element of each module configured as an electrical device, the groove width of each groove corresponding to the maximum current that is intended for that particular electrical device, the groove width of the terminal element of the intermediate module (61) being configured to be smaller than the groove width of the groove in the terminal element of the power supply module (60).

2. Drive system according to claim 1,
**characterised in that**
each thickness is measured in each case in parallel with the screw axis of the screw used for the contact.

3. Drive system according to any of the preceding claims,
**characterised in that**
the width of each busbar (1, 20, 30, 31, 40, 50) in the first terminal region (4, 34, 44) is larger than the width of each busbar (1, 20, 30, 31, 40, 50) in the second terminal region (8).

4. Drive system according to any of claims 1 or 2,
**characterised in that**
the width of each busbar (1, 20, 30, 31, 40, 50) in the first terminal region (4, 34, 44) is the same as the width of each busbar (1, 20, 30, 31, 40, 50) in the second terminal region (8).

5. Drive system according to any of the preceding claims,
**characterised in that**
the cross-sectional area of the busbar (1, 20, 30, 31, 40, 50) in the connection region is the same as or greater than the cross-sectional area of the busbar (1, 20, 30, 31, 40, 50) in the first terminal region (4, 34, 44).

6. Drive system according to any of the preceding claims,
**characterised in that**
the cross-sectional area of the busbar (1, 20, 30, 31, 40, 50) in the first terminal region (4, 34, 44) is the same as the cross-sectional area of the busbar (1, 20, 30, 31, 40, 50) in the second terminal region (8).

7. Drive system according to any of the preceding claims,
**characterised in that**
each busbar (1, 20, 30, 31, 40, 50) has a through-hole (2, 6, 7, 32, 42, 43, 45, 51) in the first terminal region (4, 34, 44),
each busbar (1, 20, 30, 31, 40, 50) has a through-hole (2, 6, 7, 32, 42, 43, 45, 51) in the second terminal region (8) and
each busbar (1, 20, 30, 31, 40, 50) has a through-hole (2, 6, 7, 32, 42, 43, 45, 51) in the connection region (5).

8. Drive system according to any of the preceding claims,
**characterised in that**
the first terminal region (4, 34, 44) is delineated from the connection region by means of a step,
in particular such that the first terminal region (4, 34, 44) is configured to be tapered starting from the connection region, in particular such that the thickness of each busbar (1, 20, 30, 31, 40, 50) decreases monotonically from the connection region towards the first terminal region (4, 34, 44) but in particular does not decrease strictly monotonically.

9. Drive system according to any of the preceding claims,
**characterised in that**
each busbar (1, 20, 30, 31, 40, 50) is configured in one part, i.e. as a single piece,
or **in that**
each busbar (1, 20, 30, 31, 40, 50) is configured in two parts, in particular formed of a first and a second busbar part (40, 46).

10. Drive system according to any of the preceding claims,
**characterised in that**
the second terminal region (8) is delineated from the connection region by means of a further step,
in particular such that the second terminal region (8) is configured to be tapered starting from the connection region, in particular such that the thickness of each busbar (1, 20, 30, 31, 40, 50) decreases monotonically from the connection region towards the second terminal region (8) but in particular does not decrease strictly monotonically.

11. Drive system according to any of the preceding claims,
**characterised in that**
the first terminal region (4, 34, 44) is received in a groove in a terminal element of the inverter (62),
the second terminal region (8) being received in a groove in a terminal element of the power supply module (60),
the connection region being received in a groove in a terminal element of the intermediate module (61).

12. Drive system according to any of the preceding claims,
**characterised in that**
the intermediate module is a capacitor module comprising a parallel circuit of capacitors, which is supplied from the terminal of the capacitor module.

13. Drive system according to any of the preceding claims,
**characterised in that**
the busbar (1, 20, 30, 31, 40, 50) is produced in a cold-worked manner, in particular the taper of the busbar (1, 20, 30, 31, 40, 50) is produced by cold working.

## Revendications

1. Système d'entraînement,
présentant des modules présentant respectivement un raccordement,
où les raccordements respectifs sont connectés électriquement au moyen d'un rail conducteur (1, 20, 30, 31, 40, 50) respectif,
où le rail conducteur (1, 20, 30, 31, 40, 50) respectif présente une première région de raccordement (4, 34, 44), une deuxième région de raccordement (8) et une région de connexion (5) agencée entre les première et deuxième régions de raccordement et reliant électriquement les première et deuxième régions de raccordement,
où la première région de raccordement (4, 34, 44) présente une première épaisseur, où la deuxième région de raccordement (8) présente une deuxième épaisseur,
où la région de connexion (5) présente la deuxième épaisseur,
où un premier des modules est un module d'alimentation (60),
un deuxième des modules est un module intermédiaire (61) et
un troisième des modules est un onduleur (62) alimentant un moteur électrique,
où le module intermédiaire (61) est
- un module de condensateur,
- un hacheur de freinage actif,
- un module de filtration actif ou
- un dispositif de récupération sous forme de bloc permettant de récupérer de l'énergie dans un système de tension triphasée alimentant le module d'alimentation (60), en particulier au cas où la tension dépasse une valeur de seuil au niveau du raccordement situé du côté tension continue,
où une première vis est guidée à travers un premier trou (2) dans la première région de raccordement (4, 34, 44) et est vissée dans un alésage fileté de l'élément de raccordement du module réalisé sous forme d'onduleur (62),
où une deuxième vis est guidée à travers un deuxième trou (7) et sa section filetée est vissée dans un alésage fileté de l'élément d'accueil du module d'alimentation (60) jusqu'à ce que la tête de vis de la vis presse le rail conducteur sur l'élément d'accueil et provoque ainsi un contact électrique,
où une troisième vis supplémentaire est guidée à travers un troisième trou (6) et est vissée dans un élément d'accueil du module intermédiaire (61),
**caractérisé en ce que**
la première épaisseur est inférieure à la deuxième épaisseur,
le rail conducteur (1, 20, 30, 31, 40, 50) est accueilli dans une rainure respective d'un élément d'accueil respectif du module respectif réalisé sous forme d'appareil électrique, où la largeur de rainure de la rainure respective correspond au courant maximal prévu pour l'appareil électrique respectif,
où la largeur de rainure de l'élément de raccordement du module intermédiaire (61) est inférieure à la largeur de rainure de l'élément de raccordement du module d'alimentation (60).

2. Système d'entraînement selon la revendication 1,
**caractérisé en ce que**
l'épaisseur respective est mesurée de manière respectivement parallèle à l'axe de vis de la vis utilisée pour la mise en contact.

3. Système d'entraînement selon l'une quelconque des revendications précédentes,
**caractérisé en ce que**
la largeur du rail conducteur (1, 20, 30, 31, 40, 50) respectif dans la première région de raccordement (4, 34, 44) est supérieure à la largeur du rail conducteur (1, 20, 30, 31, 40, 50) respectif dans la deuxième région de raccordement (8).

4. Système d'entraînement selon l'une quelconque des revendications 1 ou 2,
**caractérisé en ce que**
la largeur du rail conducteur (1, 20, 30, 31, 40, 50) respectif dans la première région de raccordement (4, 34, 44) est égale à la largeur du rail conducteur (1, 20, 30, 31, 40, 50) respectif dans la deuxième région de raccordement (8).

5. Système d'entraînement selon l'une quelconque des revendications précédentes,
**caractérisé en ce que**
la surface de section transversale du rail conducteur (1, 20, 30, 31, 40, 50) dans la région de connexion est égale ou supérieure à la surface de section transversale du rail conducteur (1, 20, 30, 31, 40, 50) dans la première région de raccordement (4, 34, 44).

6. Système d'entraînement selon l'une quelconque des revendications précédentes,
**caractérisé en ce que**
la surface de section transversale du rail conducteur (1, 20, 30, 31, 40, 50) dans la première région de raccordement (4, 34, 44) est égale à la surface de section transversale du rail conducteur (1, 20, 30, 31, 40, 50) dans la deuxième région de raccordement (8).

7. Système d'entraînement selon l'une quelconque des revendications précédentes,
**caractérisé en ce que**
le rail conducteur (1, 20, 30, 31, 40, 50) respectif présente un trou traversant (2, 6, 7, 32, 42, 43, 45, 51) dans la première région de raccordement (4, 34, 44),
le rail conducteur (1, 20, 30, 31, 40, 50) respectif présente un trou traversant (2, 6, 7, 32, 42, 43, 45, 51) dans la deuxième région de raccordement (8) et
le rail conducteur (1, 20, 30, 31, 40, 50) respectif présente un trou traversant (2, 6, 7, 32, 42, 43, 45, 51) dans la région de connexion (5).

8. Système d'entraînement selon l'une quelconque des revendications précédentes,
**caractérisé en ce que**
la première région de raccordement (4, 34, 44) est délimitée par rapport à la région de connexion au moyen d'une marche,
en particulier de sorte que la première région de raccordement (4, 34, 44) se rétrécit à partir de la région de connexion, en particulier de sorte que l'épaisseur du rail conducteur (1, 20, 30, 31, 40, 50) respectif diminue de manière monotone à partir de la région de connexion vers la première région de raccordement (4, 34, 44), mais en particulier ne diminue pas de manière strictement monotone.

9. Système d'entraînement selon l'une quelconque des revendications précédentes,
**caractérisé en ce que**
le rail conducteur (1, 20, 30, 31, 40, 50) respectif est réalisé d'une seule pièce, c'est-à-dire d'un seul tenant
ou **en ce que**
le rail conducteur (1, 20, 30, 31, 40, 50) respectif est réalisé en deux parties, en particulier en une première et une deuxième partie de rail conducteur (40, 46).

10. Système d'entraînement selon l'une quelconque des revendications précédentes,
**caractérisé en ce que**
la deuxième région de raccordement (8) est délimitée par rapport à la région de connexion au moyen d'une marche supplémentaire,
en particulier de sorte que la deuxième région de raccordement (8) se rétrécit à partir de la région de connexion, en particulier de sorte que l'épaisseur du rail conducteur (1, 20, 30, 31, 40, 50) respectif diminue de manière monotone à partir de la région de connexion vers la deuxième région de raccordement (8), mais en particulier ne diminue pas de manière strictement monotone.

11. Système d'entraînement selon l'une quelconque des revendications précédentes,
**caractérisé en ce que**
la première région de raccordement (4, 34, 44) est accueillie dans une rainure d'un élément de raccordement de l'onduleur (62)
où la deuxième région de raccordement (8) est accueillie dans une rainure d'un élément de raccordement du module d'alimentation (60),
où la région de connexion est accueillie dans une rainure d'un élément de raccordement du module intermédiaire (61).

12. Système d'entraînement selon l'une quelconque des revendications précédentes,
**caractérisé en ce que**
le module intermédiaire est un module de condensateur qui présente un circuit parallèle de condensateurs alimenté à partir du raccordement du module de condensateur.

13. Système d'entraînement selon l'une quelconque des revendications précédentes,
**caractérisé en ce que**
le rail conducteur (1, 20, 30, 31, 40, 50) est formé à froid, en particulier le rétrécissement du rail conducteur (1, 20, 30, 31, 40, 50) est formé à froid.
